# EUROPEAN PATENT SPECIFICATION

(11) **EP 3 360 661 B1**
(45) Date of publication and mention of the grant of the patent: **29.05.2019**
(21) Application number: 18156457.6
(22) Date of filing: 13.02.2018
(51) Int. Cl.: B29C 45/14, B29C 33/12, B29C 33/16, H05B 3/86, H05B 3/84

(54) **METHOD FOR PRODUCING RESIN MEMBER INCLUDING CONDUCTIVE PASTE LAYER AND FEED PORTION.**
VERFAHREN ZUR HERSTELLUNG EINES HARZSTÜCKS MIT LEITFÄHIGER PASTENSCHICHT UND ZUFUHR.
PROCEDE DE PRODUCTION D 'UN ELEMENT DE RESINE COMPRENANT UNE COUCHE DE PATE CONDUCTRICE ET UNE PARTIE D' ALIMENTATION.

(30) Priority: 14.02.2017 JP 2017025153
(43) Date of publication of application: 15.08.2018
(73) Proprietor: TOYOTA JIDOSHA KABUSHIKI KAISHA, Toyota-shi, Aichi-ken 471-8571 (JP)
(72) Inventor: NISHIDA, Ai, Aichi-ken, 471-8571 (JP)
(74) Representative: Kuhnen & Wacker Patent- und Rechtsanwaltsbüro PartG mbB

(56) References cited:
- JP-A- H0 732 976
- JP-A- 2010 527 120

## Description

### BACKGROUND

### Technical Field

The present disclosure relates to a method for producing a resin member including a conductive paste layer and a feed portion, and a method for connecting a resin member including a conductive paste layer and a feed portion to an external feed member.

### Background Art

Conductive wires, such as heating wires, that form a defogger for removing fog or a de-icer for removing snow and ice, for example, are provided in a predetermined pattern on the interior surface of window glass of a vehicle, such as a windshield, rear glass, side glass, or roof glass. Each of such defogger and de-icer includes a plurality of heating wires (striae heating wires) that are formed such that they extend in the horizontal direction when mounted on a vehicle, and also includes feed portions at given positions of the heating wires. An external feed member is connected to the feed portions so that power can be fed to the heating wires and the like whenever necessary.

When the window glass is formed of inorganic glass, sintering at about 600 °C is performed after a conductive paste such as a silver paste is printed thereon. Therefore, strong adhesion between the inorganic glass and the conductive paste as well as high stability is ensured.

Meanwhile, when the window glass is formed of resin glass, the temperature of treatment performed after a conductive paste is printed thereon is often low. Therefore, it is necessary to maintain the same level of quality stability as that when the window glass is formed of inorganic glass even when low-temperature treatment is performed.

Herein, conductive paste layers have many development problems, for example, in printability to form narrow wires to meet the needs of the market, as well as problems with lowering resistance and increasing stretchability so that the layers can follow the surface of glass with a large curvature. Examples of the specific configuration of such a conductive paste layer include the one in which a resin film and a conductive paste layer are stacked.

Accordingly, a plastic panel with not a configuration in which a conductive paste layer is provided on the surface of a product and thus is exposed to the external environment but a configuration in which a conductive paste layer is provided within a product has been developed and is described in JP 2010-527120 A as one embodiment.

By the way, for producing the aforementioned window glass, insert molding has been proposed that includes preparing a resin film, which has a conductive paste layer printed thereon, as an insert member, storing the insert member in a cavity of a mold, and injecting resin, for example, to form a resin panel, thereby integrating the resin film having the conductive paste layer thereon with the resin panel.

In such insert molding, it is necessary to devise a method of fixing the insert member in place within the mold as the size of the window glass to be formed is larger.

However, if a method of suctioning the insert member using air is used, for example, there is a high possibility that a hole may be generated in the resin panel formed due to a suction force acting thereon. Meanwhile, if a method of fixing the insert member in place using tape is used, there is a high possibility that the residue of the tape or the tape itself may remain in the product.

In response, JP 2011-143609 A and JP 2004-276289 A each disclose a method of disposing a magnet in an insert member and fixing the insert member in place within a mold using the magnetic attractive force between the mold and the magnet.

With the method using such magnetic attraction, problems associated with when the fixation method using air suction or tape is used are unlikely to occur, and injection of resin, for example, is possible while the insert member is adequately fixed in place within the mold.

From JP H07-32976 A, another method for producing a resin member including a conductive paste layer and a feed portion is known, which method comprises storing in a cavity of a mold an insert member including an exterior resin film with a conductive paste layer, positioning and fixing the insert member in place within the cavity, and injecting resin into the cavity to form a resin panel, thereby integrating the insert member, to produce a resin member.

### SUMMARY

With the aforementioned method of disposing a magnet in an insert member and fixing the insert member in place within a mold using the magnetic attractive force between the mold and the magnet, it is possible to suitably fix the insert member in place relative to the mold, but a magnet having no relationship with the structural members of the window glass will remain in the insert member. Therefore, such a product cannot be said to be preferable as a window glass product.

The present disclosure has been made in view of the foregoing problems, and exemplary embodiments relate to providing a method for producing a resin member including a conductive paste layer and a feed portion that can suitably fix an insert member in place relative to a mold without leaving a part having no relationship with the structural members of the final product within the insert member, and a method for connecting a resin member, which includes a conductive paste layer and a feed portion, produced with such a method to an external feed member.

Accordingly, the method for producing a resin member including a conductive paste layer and a feed portion in accordance with the present disclosure includes storing in a cavity of a mold an insert member, which includes an exterior resin film with a conductive paste layer, and a first magnetic attractor to become a feed portion, the mold being a second magnetic attractor; positioning and fixing the insert member in place within the cavity using the magnetic attractive force of the first magnetic attractor and the second magnetic attractor; and injecting resin into the cavity to form a resin panel; thereby integrating the insert member, the first magnetic attractor, and the resin panel with one another to produce a resin member.

According to the method for producing a resin member of the present disclosure, the insert member including the exterior resin film as well as the first magnetic attractor to become the feed portion are stored in the cavity of the mold, whereby it becomes possible to produce a resin member while fixing the insert member in place within the mold by suitably attracting the first magnetic attractor to the mold, which is the second magnetic attractor, using the magnetic attractive force. In addition, it is possible to prevent a part having no relationship with the final product from remaining in the product since the first magnetic attractor is a feed portion that partially forms the final product.

The resin member to be produced is not particularly limited as long as it is a member including a conductive paste layer, a feed portion that feeds power to the conductive paste layer, and a resin panel. Examples of the resin member include window glass for vehicles, such as a windshield, rear glass, side glass, and roof glass.

Herein, examples of the exterior resin film of the insert member include a stack of a resin film and a conductive paste layer containing silver paste and the like, and a stack of such layers and a black resin paste layer printed thereon at a portion corresponding to a window frame. The first magnetic attractor to become a feed portion is attached to a predetermined portion of the exterior resin film.

Examples of the material of the resin film of the exterior resin film include polycarbonate and polyester.

Examples of the method of injecting resin into the mold include injection molding, blow molding, and compression molding. Examples of the resin material injected include polycarbonate, polyester, PBT, and ABS.

Herein, examples of the specific configuration of the first magnetic attractor and the second magnetic attractor include the following.

A first configuration is the one in which each of the first magnetic attractor and the second magnetic attractor is a magnet. Examples of the magnet include a neodymium magnet and a samarium cobalt magnet. Accordingly, the insert member can be suitably fixed in place within the cavity of the mold by the magnetic attractive force of the two magnets.

Meanwhile, a second configuration is the one in which the first magnetic attractor is a magnet and the second magnetic attractor is magnetically attracting metal. Herein, examples of the magnetically attracting metal include iron, cobalt, and nickel, or alloys thereof.

Further, a third configuration is the one in which, as opposed to the second configuration, the first magnetic attractor is magnetically attracting metal, and the second magnetic attractor is a magnet.

Among the aforementioned configurations, when the second magnetic attractor is a magnet as in the first embodiment and the second embodiment, the entire mold may be a magnet. However, a configuration in which the mold is formed of a common mold and a magnet is buried therein is preferably used from the aspect of the production cost of the mold.

In addition, a method for connecting a resin member including a conductive paste layer and a feed portion to an external feed member in accordance with the present disclosure includes: after producing a resin member with the aforementioned method, screwing a screw portion of an external feed member into a threaded hole provided in the feed portion, thereby connecting the resin member and the external feed member.

Herein, examples of the method of screwing the screw portion into the threaded hole include a method of, with the threaded hole facing a wide surface of the insert member, screwing the screw portion of the external feed member into the threaded hole from the wide surface side of the insert member, and a method of, with the threaded hole facing the thickness side of the resin member (i.e., side surface of the resin member perpendicular to the wide surface thereof), inserting the screw portion of the external feed member into the threaded hole from the thickness side of the insert member. It should be noted that when any of such methods is used, a hole communicating with the threaded hole may be opened in advance at a position corresponding to the threaded hole of the wide surface of the insert member or a position corresponding to the threaded hole of the thickness side of the resin member.

When the screw portion of the external feed member is screwed into the threaded hole of the feed portion so as to connect the resin member and the external feed member, the feed portion is allowed to bite into the conductive paste layer (printed layer) of the insert member by the screwing and thus, the mutual contact resistance between the two can be lowered. Such screwing also allows the screw portion of the external feed member to engage with the feed portion, thus lowering the mutual contact resistance between the two.

Further, since fixation of the feed portion and attachment of the external feed member to the feed portion are conducted after the resin film with the conductive paste printed thereon, which is the insert member, is stored in the cavity of the mold, that is, since the external feed member is not connected to the resin member yet until the external feed member is connected to the feed portion, the portability and handling property of the insert member that is the intermediate product as well as the resin member that is the final product become excellent, and excellent workability can thus be achieved.

Furthermore, in the production of the resin member, only the insert member is stored in the cavity of the mold, and the external feed member is not present therein. Therefore, there is no possibility that the external feed member may damage the surface of the cavity.

According to a preferred embodiment of the method for connecting a resin member including a conductive paste layer and a feed portion to an external feed member in accordance with the present disclosure, a two-solution-mixture paste containing a conductive paste and a curing accelerator is stored in the threaded hole in advance so that when the screw portion of the external feed member is screwed into the threaded hole, the two-solution-mixture paste is mixed and a curing reaction occurs, and the resin member and the external feed member are thus connected.

As the screw portion of the external feed member is screwed into the threaded hole, the two-solution-mixture paste containing the conductive paste and the curing accelerator stored in the threaded hole is mixed, and the mixed two-solution-mixture paste is extruded such that it flows out of the threaded hole, and also, a curing reaction starts as the two-solution-mixture paste is mixed, so that the screw portion, the conductive paste layer of the insert member, and the threaded hole are brought into contact with one another physically. Additionally, gaps between such members are also filled with the mixed two-solution-mixture paste, and the mixed two-solution-mixture paste is then cured. Accordingly, the contact between the external feed member, the conductive paste layer, and the feed portion is further improved and further higher conductivity can thus be realized, and also, the connection strength between the external feed member and the feed portion can be increased.

As can be understood from the foregoing description, according to the method for producing a resin member including a conductive paste layer and a feed portion in accordance with the present disclosure, it is possible to produce a resin member including a conductive paste layer and a feed portion by suitably fixing an insert member in place relative to a mold without leaving a part having no relationship with the structural members of the final product within the product. Further, according to the method for connecting a resin member including a conductive paste layer and a feed portion to an external feed member in accordance with the present disclosure, it is possible to produce a resin member with excellent workability and realize excellent conductivity between the feed portion of the resin member and the external feed member as well as high connection strength between the feed portion of the resin member and the external feed member.

### BRIEF DESCRIPTION OF THE DRAWINGS

FIG. 1 is a schematic diagram illustrating a method for producing a resin member including a conductive paste layer and a feed portion of the present disclosure;
FIG. 2 is a schematic diagram illustrating the method for producing a resin member continued from FIG. 1;
FIG. 3 is a schematic diagram illustrating the method for producing a resin member continued from FIG. 2;
FIG. 4 is a schematic diagram illustrating Embodiment 1 of a method for connecting a resin member including a conductive paste layer and a feed portion to an external feed member of the present disclosure;
FIG. 5 is a schematic diagram illustrating Embodiment 2 of a method for connecting a resin member including a conductive paste layer and a feed portion to an external feed member of the present disclosure; and
FIG. 6 is a schematic diagram illustrating Embodiment 2 of the connection method continued from FIG. 5.

### DETAILED DESCRIPTION

Hereinafter, an embodiment of a method for producing a resin member including a conductive paste layer and a feed portion of the present disclosure, and an embodiment of a method for connecting a resin member including a conductive paste layer and a feed portion to an external feed member will be described with reference to the accompanying drawings. Although an example shown in the drawings illustrates a configuration in which a second magnetic attractor made of a magnet is buried in a mold, and a first magnetic attractor is also made of a magnet, it is also possible to use a configuration in which one of the first magnetic attractor or the second magnetic attractor is a magnet and the other is magnetically attracting metal, such as iron, cobalt, or nickel, or alloys thereof, for example. Further, although the example shown in the drawings illustrates a method of, with a threaded hole facing a wide surface of an insert member, screwing a screw portion of an external feed member into the threaded hole from the wide surface side of the insert member, it is also possible to use a method of, with the threaded hole facing the thickness side of a resin member (i.e., side surface of the resin member perpendicular to the wide surface thereof), inserting the screw portion of the external feed member into the threaded hole from the thickness side of the insert member.

### (Embodiment of method for producing resin member including conductive paste layer and feed portion)

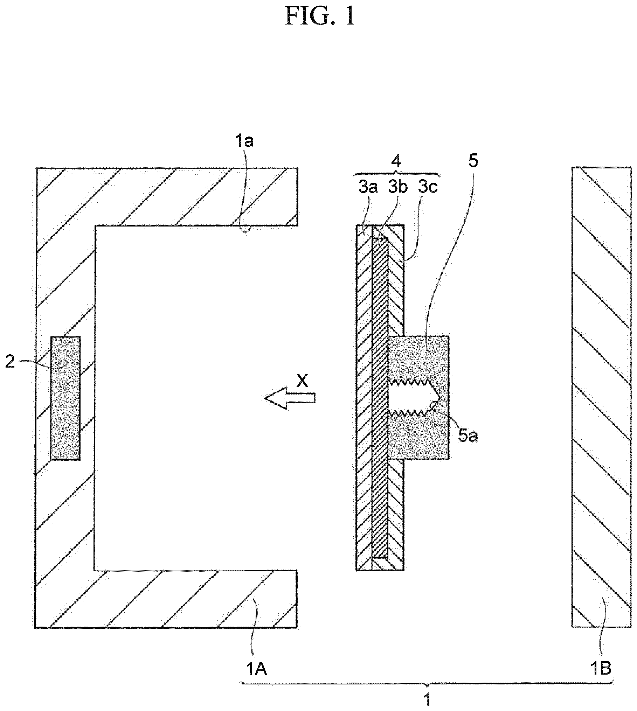

FIGS. 1 to 3 are schematic diagrams sequentially illustrating a method for producing a resin member including a conductive paste layer and a feed portion of the present disclosure. Although a resin member including a conductive paste layer and a feed portion, which is the target to be produced in the example shown in the drawings, is window glass for vehicles, the targets of the production method and the connection method of the present disclosure are not limited thereto.

In the method for producing a resin member shown in the drawings, an insert member 4 made of an exterior resin film with a conductive paste layer 3b is prepared first. More specifically, the insert member 4 made of an exterior resin film has a stack of a resin film 3a, the conductive paste layer 3b, and a black resin paste layer 3c. The conductive paste layer 3b is printed in a stria heating wire pattern, while the black resin paste layer 3c is printed at a position corresponding to a window frame, and the two layers are printed on the same plane of the resin film 3a.

Herein, a method of producing the insert member 4 will be briefly described. First, a silver paste containing silver powder, additive, and the like is printed in a predetermined pattern (predetermined stria heating wire pattern) on the resin film 3a and is dried so that the conductive paste layer 3b made of the silver paste is produced on the resin film 3a. Examples of the printing method herein include screen printing and gravure printing.

Next, a black resin paste is printed and dried so that the black resin paste layer 3c with a frame shape that conforms to the contour of the rear glass or the like is produced. Examples of the printing method herein include screen printing and gravure printing.

Although the example herein illustrates a method of sequentially printing a silver paste and a black resin paste, the printing order may be reversed. In addition, drying may be performed either after termination of each printing step or all of the printing steps. Further, other conductive pastes such as a copper paste may be applied instead of a silver paste.

A mold 1 used to produce the resin member includes a stationary mold 1A and a movable mold IB. The stationary mold 1A has buried therein a second magnetic attractor 2 made of a magnet. In addition, the insert member 4 is stored into a cavity 1a of the mold 1 (in the X direction of FIG. 1), and further, a first magnetic attractor 5 is disposed so that the insert member 4 is fixed in place by the attraction between the first magnetic attractor 5 and the second magnetic attractor 2. Then, the mold is closed.

Herein, each of the first magnetic attractor 5 for fixing the insert member 4 in place within the cavity 1a of the mold 1, and the second magnetic attractor 2 buried in the stationary mold 1A is formed of a neodymium magnet, a samarium cobalt magnet, or the like.

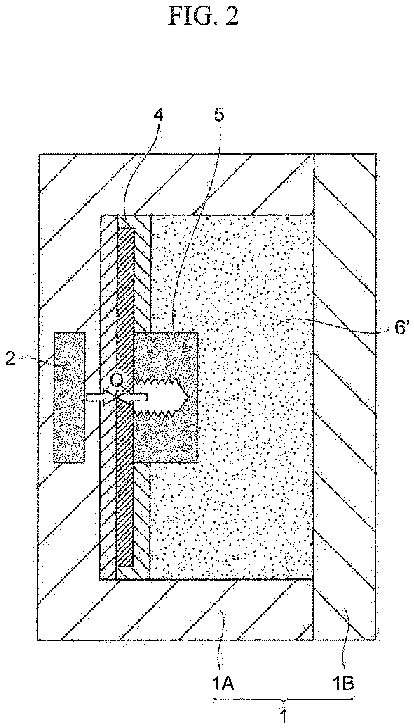

As shown in FIG. 2, the first magnetic attractor 5 and the second magnetic attractor 2 are mutually magnetically attracted to each other (with magnetic attractive force Q), whereby the insert member 4 can be suitably positioned within the mold 1.

Once the insert member 4 is positioned within the mold 1, resin 6' for a resin panel is injected into the mold 1 as shown in FIG. 2. Examples of the method for injecting the resin 6' herein include injection molding, blow molding, and compression molding. In addition, examples of the resin material injected herein include polycarbonate, acrylic, polyester, polyethylene, PBT, and ABS.

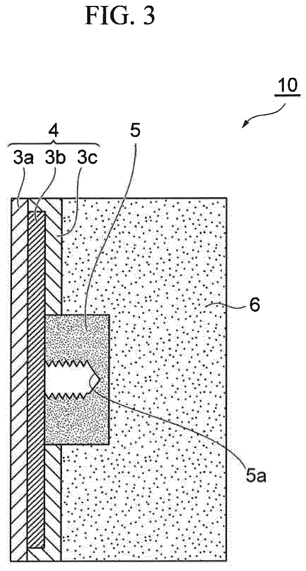

After the resin 6' has cured, it is removed from the mold, whereby the insert member 4 and a resin panel 6 are integrated with each other while being stacked as shown in FIG. 3. Therefore, a resin member 10, which includes the resin panel 6 having buried therein a part of the first magnetic attractor 5 to become a feed portion, is produced.

According to the method for producing a resin member shown in the drawings, the first magnetic attractor 5 that is buried becomes a feed portion. Therefore, there is no possibility that a member having no relationship with the final product will remain in the product, and thus, it is possible to produce the resin member 10 including a conductive paste layer and a feed portion while suitably fixing the insert member 4 in place relative to the mold 1.

### (Embodiment of method for connecting resin member including conductive paste layer and feed portion to external feed member)

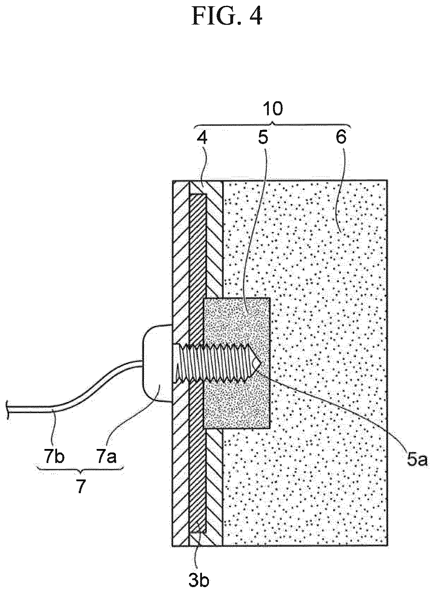

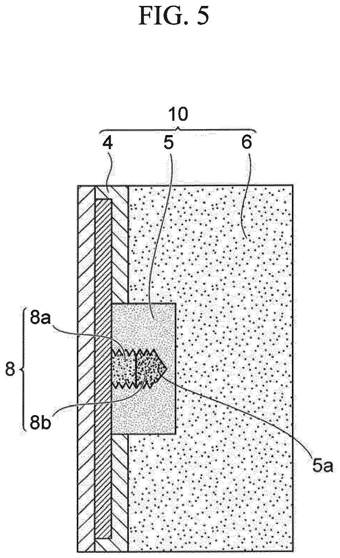

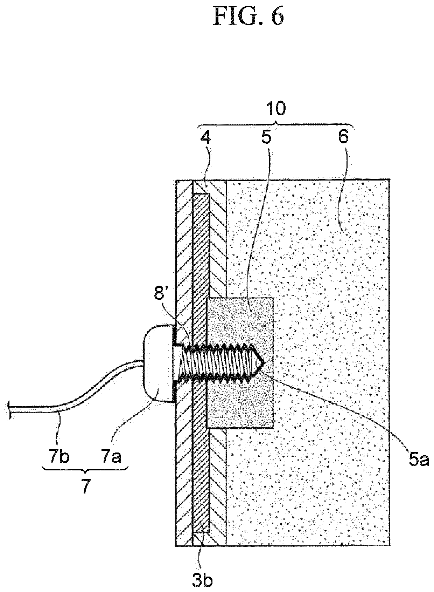

Next, a method for connecting the resin member produced with the production method shown in FIGS. 1 to 3 to an external feed member will be described. FIG. 4 is a schematic diagram illustrating Embodiment 1 of the connection method, and FIGS. 5 and 6 are schematic diagrams sequentially illustrating Embodiment 2 of the connection method.

In the connection method shown in FIG. 4, a connector 7a (screw portion) of an external feed member 7, which includes a lead wire 7b and the connector 7a, is screwed into a wide surface of the insert member 4 of the resin member 10 at a position corresponding to the feed portion 5, and is further screwed into a threaded hole 5a provided in the feed portion 5 so that the external feed member 7 is connected to the feed portion 5.

Although not shown in the drawing, a threaded hole may be opened in advance in the insert member 4 before the external feed member 7 is screwed thereinto.

When the screw portion 7a of the external feed member 7 is screwed into the threaded hole 5a of the feed portion 5 so as to connect the resin member 10 and the external feed member 7, the feed portion 5 is allowed to bite into the conductive paste layer 3b (printed layer) of the insert member 4 by the screwing and thus, the mutual contact resistance between the two can be lowered. Such screwing also allows the screw portion 7a of the external feed member 7 to engage with the feed portion 5, thus lowering the mutual contact resistance between the two.

Further, since the external feed member 7 is attached to the feed portion 5 later, that is, since the external feed member 7 is not connected to the resin member 10 yet until the external feed member 7 is connected to the feed portion 5, the portability and handling property of the insert member 4 that is the intermediate product as well as the resin member 10 that is the final product become excellent, and excellent workability can thus be achieved.

Furthermore, in the production of the resin member 10, only the insert member 4 is stored in the cavity 1a of the mold 1, and the external feed member 7 is not present therein. Therefore, there is no possibility that the external feed member 7 may damage the surface of the cavity.

Meanwhile, a connection method shown in FIGS. 5 and 6 is a method of first storing a two-solution-mixture paste 8, which contains a conductive paste 8a and a curing accelerator 8b, in the threaded hole 5a of the feed portion 5 as shown in FIG. 5, and then screwing the screw portion 7a of the external feed member 7 into the threaded hole 5a as shown in FIG. 6, thereby causing mixing and a curing reaction of the two-solution-mixture paste 8 to connect the resin member 10 and the external feed member 7.

As the screw portion 7a of the external feed member 7 is screwed into the threaded hole 5a, the two-solution-mixture paste 8 containing the conductive paste 8a and the curing accelerator 8b stored in the threaded hole 5a is mixed, and the mixed two-solution-mixture paste 8' is extruded such that it flows out of the threaded hole 5a, and also, a curing reaction of the mixed two-solution-mixture paste 8' starts, so that the screw portion 7a, the conductive paste layer 3b of the insert member 4, and the threaded hole 5a are brought into contact with one another physically. Additionally, the gaps between such members are also filled with the mixed two-solution-mixture paste 8', and the mixed two-solution-mixture paste 8' is then cured.

Accordingly, the contact between the external feed member 7, the conductive paste layer 3b, and the feed portion 5 is further improved and even higher conductivity can thus be realized, and also, the connection strength between the external feed member 7 and the feed portion 5 can be increased.

### DESCRIPTION OF SYMBOLS

- 1: Mold
- 1A: Stationary mold
- 1B: Movable mold
- 2: Second magnetic attractor (magnet)
- 3a: Resin film
- 3b: Conductive paste layer
- 3c: Black resin paste layer
- 4: Insert member (exterior resin film)
- 5: First magnetic attractor (feed portion, magnet)
- 5a: Threaded hole
- 6: Resin panel
- 6': Resin
- 7: External feed member
- 7a: Connector (screw portion)
- 7b: Lead wire
- 8: Two-solution-mixture paste
- 8a: Conductive paste
- 8b: Curing accelerator
- 8': Two-solution-mixture paste that has been mixed
- 10: Resin member (resin member including conductive paste layer and feed portion)

## Claims

1. A method for producing a resin member (10) including a conductive paste layer (3b) and a feed portion, comprising:
storing in a cavity of a mold (1) an insert member (4) including an exterior resin film with a conductive paste layer (3b), and a first magnetic attractor (5) to become a feed portion, the mold (1) being a second magnetic attractor (2);
positioning and fixing the insert member (4) in place within the cavity using magnetic attractive force of the first magnetic attractor (5) and the second magnetic attractor; and
injecting resin into the cavity to form a resin panel, thereby integrating the insert member (4), the first magnetic attractor (5), and the resin panel with one another to produce a resin member (10).

2. The method for producing a resin member (10) including a conductive paste layer (3b) and a feed portion according to claim 1,
wherein:
each of the first magnetic attractor (5) and the second magnetic attractor (2) is a magnet, or
the first magnetic attractor (5) is a magnet and the second magnetic attractor (2) is magnetically attracting metal, or
the first magnetic attractor (5) is magnetically attracting metal and the second magnetic attractor (2) is a magnet.

3. The method for producing a resin member (10) including a conductive paste layer (3b) and a feed portion according to claim 1 or 2, wherein when the second magnetic attractor (2) is a magnet, the magnet is buried in the mold (1).

4. A method for connecting a resin member (10) including a conductive paste layer (3b) and a feed portion to an external feed member, comprising:
producing a resin member (10) with the method according to any one of claims 1 to 3, thereafter screwing a screw portion of an external feed member into a threaded hole (5a) provided in the feed portion, thereby connecting the resin member (10) and the external feed member.

5. The method for connecting a resin member (10) including a conductive paste layer (3b) and a feed portion to an external feed member according to claim 4, further comprising:
storing a two-solution-mixture paste (8) containing a conductive paste (8a) and a curing accelerator (8b) in the threaded hole (5a) in advance so that when the screw portion of the external feed member is screwed into the threaded hole (5a), the two-solution-mixture paste (8) is mixed and a curing reaction occurs, and the resin member (10) and the external feed member are thus connected.

## Patentansprüche

1. Verfahren zum Erzeugen eines Harzelements (10), das eine leitfähige Pastenschicht (3b) und einen Zuführabschnitt beinhaltet, aufweisend:
Unterbringen von einem Einfügeelement (4), das einen äußeren Harzfilm mit einer leitfähigen Pastenschicht (3b) beinhaltet, und von einem ersten magnetischen, zu einem Zuführabschnitt werden Attraktor (5), in einem Hohlraum einer Form (1), wobei die Form (1) ein zweiter magnetischer Attraktor (2) ist;
Positionieren und Befestigen des Einfügeelements (4) an Ort und Stelle innerhalb des Hohlraums unter Verwendung einer magnetischen Anziehungskraft des ersten magnetischen Attraktors (5) und des zweiten magnetischen Attraktors; und
Einspritzen von Harz in den Hohlraum, so dass eine Harzplatte ausgebildet wird, wodurch das Einfügeelement (4), der erste magnetische Attraktor (5) und die Harzplatte miteinander integriert werden, so dass ein Harzelement (10) erzeugt wird.

2. Verfahren zum Erzeugen eines Harzelements (10), das eine leitfähige Pastenschicht (3b) und einen Zuführabschnitt beinhaltet, nach Anspruch 1, wobei:
jeder von dem ersten magnetischen Attraktor (5) und dem zweiten magnetischen Attraktor (2) ein Magnet ist, oder
der erste magnetische Attraktor (5) ein Magnet ist und der zweite magnetische Attraktor (2) ein magnetisch anziehendes Metall ist, oder
der erste magnetische Attraktor (5) ein magnetisch anziehendes Metall ist und der zweite magnetische Attraktor (2) ein Magnet ist.

3. Verfahren zum Erzeugen eines Harzelements (10), das eine leitfähige Pastenschicht (3b) und einen Zuführabschnitt beinhaltet, nach Anspruch 1 oder 2, wobei, wenn der zweite magnetische Attraktor (2) ein Magnet ist, der Magnet in der Form (1) vergraben ist.

4. Verfahren zum Verbinden eines Harzelements (10), das eine leitfähige Pastenschicht (3b) und einen Zuführabschnitt beinhaltet, zu einem externen Zuführelement, aufweisend:
Erzeugen eines Harzelements (10) mit dem Verfahren nach einem der Ansprüche 1 bis 3, woraufhin ein Schraubenabschnitt von einem externen Zuführelement in ein Gewindeloch (5a) geschraubt wird, das in dem Zuführabschnitt ausgebildet ist, wodurch das Harzelement (10) und das externe Zuführelement verbunden werden.

5. Verfahren zum Verbinden eines Harzelements (10), das eine leitfähige Pastenschicht (3b) und einen Zuführabschnitt beinhaltet, mit einem externen Zuführelement nach Anspruch 4, ferner aufweisend:
Unterbringen einer eine leitfähige Paste (8a) und einen Aushärtungsbeschleuniger (8b) beinhaltenden Zwei-Lösungs-Gemisch-Paste (8) in dem Gewindeloch (5a) im Voraus, so dass, wenn der Schraubenabschnitt des externen Zuführelements in das Gewindeloch (5a) geschraubt wird, die Zwei-Lösungs-Gemisch-Paste (8) vermischt wird und eine Aushärtungsreaktion eintritt, und das Harzelement (10) und des externe Zuführelement somit verbunden sind.

## Revendications

1. Procédé pour la production d'un élément de résine (10) incluant une couche de pâte conductrice (3b) et une portion d'alimentation, comprenant :
le stockage dans une cavité d'un moule (1) d'un élément d'insert (4) incluant un film de résine extérieur avec une couche de pâte conductrice (3b), et un premier attracteur magnétique (5) à devenir une portion d'alimentation, le moule (1) étant un second attracteur magnétique (2) ;
le positionnement et la fixation de l'élément d'insert (4) en place dans la cavité en utilisant une force attractive magnétique du premier attracteur magnétique (5) et du second attracteur magnétique ; et
l'injection de résine dans la cavité pour former un panneau de résine, intégrant par-là l'élément d'insert (4), le premier attracteur magnétique (5), et le panneau de résine avec un autre pour produire un élément de résine (10).

2. Procédé pour la production d'un élément de résine (10) incluant une couche de pâte conductrice (3b) et une portion d'alimentation selon la revendication 1,
dans lequel :
chacun du premier attracteur magnétique (5) et du second attracteur magnétique (2) est un aimant, ou
le premier attracteur magnétique (5) est un aimant et le second attracteur magnétique (2) est du métal magnétiquement attractif, ou
le premier attracteur magnétique (5) est du métal magnétiquement attractif et le second attracteur magnétique (2) est un aimant.

3. Procédé pour la production d'un élément de résine (10) incluant une couche de pâte conductrice (3b) et une portion d'alimentation selon la revendication 1 ou 2, dans lequel lorsque le second attracteur magnétique (2) est un aimant, l'aimant est enterré dans le moule (1).

4. Procédé pour la connexion d'un élément de résine (10) incluant une couche de pâte conductrice (3b) et une portion d'alimentation à un élément d'alimentation externe, comprenant :
la production d'un élément de résine (10) avec le procédé selon l'une quelconque des revendications 1 à 3, après cela
le vissage d'une portion de vis d'un élément d'alimentation externe dans une perforation filetée (5a) fournie dans la portion d'alimentation, connectant par-là l'élément de résine (10) et l'élément d'alimentation externe.

5. Procédé pour la connexion d'un élément de résine (10) incluant une couche de pâte conductrice (3b) et une portion d'alimentation à un élément d'alimentation externe selon la revendication 4, comprenant de plus :
le stockage d'une pâte de mélange de deux solutions (8) comprenant une pâte conductrice (8a) et un accélérateur de durcissement (8b) dans la perforation filetée (5a) à l'avance de sorte que lorsque la portion de vis de l'élément d'alimentation externe est vissée dans la perforation filetée (5a), la pâte de mélange de deux solutions (8) est mélangée et une réaction de durcissement a lieu, et l'élément de résine (10) et l'élément d'alimentation externe sont ainsi connectés.
